## Europäisches Patentamt

## European Patent Office

## Office européen des brevets

(19)

(11) Veröffentlichungsnummer: **0 009 171**
**B1**

(12)

# EUROPÄISCHE PATENTSCHRIFT

(45) Veröffentlichungstag der Patentschrift:
25.02.81

(51) Int. Cl.³: **C 08 F  22/02, C 11 D  3/37**

(21) Anmeldenummer: **79103286.5**

(22) Anmeldetag: **05.09.79**

(54) Verfahren zur Herstellung von Polymaleinsäuren aus Maleinsäureanhydrid in Gegenwart von Acetanhydrid und Wasserstoffperoxid und die Verwendung der so hergestellten Polymaleinsäuren als Gerüststoffsubstanzen und Inkrustierungsinhibitoren in Waschmitteln.

(30) Priorität: **15.09.78  DE 2840167**

(43) Veröffentlichungstag der Anmeldung:
**02.04.80 Patentblatt 80/7**

(45) Bekanntmachung des Hinweises auf die Patenterteilung:
**25.02.81 Patentblatt 81/8**

(84) Benannte Vertragsstaaten:
**BE CH DE FR GB IT NL SE**

(56) Entgegenhaltungen:
**FR-A-1 454 304**
**GB-A-1 349 769**
**US-A-3 186 572**
**US-A-3 308 067**

(73) Patentinhaber: **BASF Aktiengesellschaft,
Carl-Bosch-Strasse 38, D-6700 Ludwigshafen (DE)**

(72) Erfinder: **Perner, Johannes, Dr., Dipl.-Chem.,
Kiesstrasse 19B, D-6730 Neustadt 1 (DE)**
Erfinder: **Stork, Karl, Dr., Dipl.-Chem., In der Gewann 5,
D-6840 Lampertheim (DE)**
Erfinder: **Oppenlaender, Knut, Dr., Dipl.-Chem.,
Otto-Dill-Strasse 23, D-6700 Ludwigshafen (DE)**

Verfahren zur Herstellung von Polymaleinsäuren aus Maleinsäureanhydrid in Gegenwart von Acetanhydrid und Wasserstoffperoxid und die Verwendung der so hergestellten Polymaleinsäuren als Gerüststoffsubstanzen und Inkrustierungsinhibitoren in Waschmitteln

Die Erfindung betrifft ein neues Verfahren zur Herstellung von Polymaleinsäuren, die Molgewichte zwischen 200 und 1500 aufweisen, durch Polymerisation von Maleinsäureanhydrid in Gegenwart von Acetanhydrid und Wasserstofperoxid und gleichzeitige Verseifung des erhaltenen Polymaleinsäureanhydrids.

Die Erfindung betrifft ferner die Verwendung der nach diesem Verfahren erhaltenen Polymaleinsäuren als Gerüststoffsubstanzen und Inkrustierungsinhibitoren in Waschmitteln.

Die Polymerisation des Maleinsäureanhydrids ohne Mitverwendung von Comonomeren galt bis zum Anfang der 60er Jahre als undurchführbar. Erst 1961 erschienen die ersten Arbeiten (J. Polymer Sci., 1961, 55, S2, und Makromol. Ch., 53 [1962], 33), wonach man Maleinsäureanhydrid — im folgenden der Einfachheit halber »MSA« genannt — durch UV-Bestrahlung und/oder durch Initiierung mittels organischer Peroxide polymerisieren konnte. Nach der US-PS 3 708 436 ist ein Polymerisationsverfahren bekannt, bei dem man MSA in Gegenwart von Toluol und Benzoylperoxid polymerisiert.

Aus der GB-PS 1 349 969 kennt man ein Verfahren, bei dem man MSA in einem inerten Lösungsmittel in Gegenwart von $H_2O_2$ und Acetanhydrid polymerisiert. Andere Methoden (siehe DE-OS 2 732 628 und GB-PS 1 411 063) basieren auf der Initiatorwirkung von z. B. Di-tert.-butylperoxid zur Durchführung der Polymerisation. Hier wird z. B. Xylol als Lösungsmittel empfohlen.

Aus der DE-AS 2 047 340 ist ein Verfahren zur Herstellung von Polymaleinsäure bekannt, bei dem man MSA in Gegenwart von Acylmaleylperoxid und Borsäure bzw. eines Borsäurederivats polymerisiert und anschließend eine Hydrolyse durchführt. Dieser Initiator kann im System in situ hergestellt werden, d. h. man gibt zum Ansatz $H_2O_2$ und z. B. Acetanhydrid. Letzten Endes bedient sich der Autor der letztgenannten Literaturstelle also ebenfalls des Systems $H_2O_2$/Essigsäureanhydrid.

In der obengenannten US-PS 3 708 436 und auch der letztgenannten DE-AS 2 047 340 werden diese Polymerisate als Zusätze in Waschmitteln empfohlen.

Allen diesen Verfahren ist gemeinsam, daß die verseiften Produkte, die Polymaleinsäuren, nur in zwei Arbeitsgängen, nämlich durch Polymerisation von MSA und anschließende Verseifung des Poly-MSA zu Polymaleinsäure erhalten werden können. Häufig stellte es sich zusätzlich heraus, daß die erhaltenen Produkte in schlechter Ausbeute und schlechter Reinheit anfielen. Dies gilt vor allem für die in der DE-AS 2 047 340 beschriebene Verfahrensvariante. Hier ergab die Nachprüfung, daß als Hauptprodukt auch nach der Polymerisation und der Hydrolyse nur monomere Maleinsäure vorlag.

Außerdem hat sich gezeigt, daß die Verwendung von Polymaleinsäuren, die nach den bekannten Verfahren erhältlich sind, in der Waschmittelindustrie noch lange nicht die Ergebnisse erbracht hat, wie man sie sich eigentlich erhofft hatte.

In einem in »Chemiker-Zeitung«, 95, Seiten 550 und 551, veröffentlichten Artikel von Berth wird neben anderen Polyelektrolyten auch Polymaleinsäuren erwähnt (Tabelle, Seite 550 unten), und diese wird dort von dem erwähnten Autor wie auch die anderen Polyelektrolyte dahingehend beurteilt, daß die Waschkraft solche Substanzen enthaltender Mittel gegenüber phosphathaltigen Waschmitteln sehr stark abfällt.

Aufgrund des bisherigen Standes der Technik ergaben sich im wesentlichen zwei Ziele, die der vorliegenden Erfindung zugrunde lagen.

Das eine Ziel bestand darin, ein einfaches, möglichst einstufiges Verfahren zur Herstellung von Polymaleinsäuren aus Maleinsäureanhydrid zu entwickeln, das gute Ausbeuten und reine Endprodukte garantiert, und das andere, mit einem solchen Verfahren Produkte zu finden, die auf dem Waschmittelgebiet bessere Eigenschaften aufweisen, d. h. sie sollten neben einem guten Calciumbindevermögen, das ja nur eine von mehreren Anforderungen an Gerüststoffsubstanzen darstellt, auch die durch das Weglassen von Phosphaten bedingte Inkrustierungsproblem einer Lösung näherbringen. Schließlich sollten solche Produkte auch eine brauchbare Weißwaschwirkung, die der von Phosphaten gleichkommt, zeigen.

Diese Ziele wurden mit einem Verfahren erreicht, bei dem man MSA möglichst in einem Überschuß an Acetanhydrid — zumindest aber der gleichen molaren Menge — löst und in Gegenwart wesentlich größerer Mengen an $H_2O_2$ polymerisiert, als dies bisher vorgeschlagen wurde.

Dieses Verfahren ist gemäß den Patentansprüchen 1 bis 4 definiert.

Es hat sich herausgestellt, daß danach relativ niedermolekulare, bereits verseifte Polymaleinsäuren mit Molgewichten zwischen 200 und 1500 entstehen, die sich überraschenderweise in phosphatarmen Waschmitteln als ausgezeichnete Inkrustierungsinhibitoren mit gleichzeitig gutem Calciumbindevermögen und guter Weißwaschwirkung erhalten. Sie weisen also wichtige Merkmale auf, die man bisher nur bei Phosphaten kannte.

Das erfindungsgemäße Verfahren ist in einfacher Weise zu realisieren:

Man löst Maleinsäureanhydrid in der 1- bis 5fachen molaren Menge (100 bis 500 Molprozent — bezogen auf MSA) Acetanhydrid und gibt bei 80 bis 140°C, vorzugsweise 100 bis 120°C, die 0,2- bis 0,5fache molare Menge (20 – 50 Molprozent, bezogen auf MSA) $H_2O_2$ vorzugsweise in Form einer 30- bis 50prozentigen wäßrigen Lösung zu. Nach der Zugabe läuft die Reaktion bei 100 bis 140°C, vorzugsweise 100 bis 120°C, innerhalb 1 bis 8 Stunden ab.

Die Zugabe des $H_2O_2$ kann sofort oder allmählich erfolgen, vorzugsweise läßt man das Wasserstoffperoxid langsam unter starker mechanischer Bewegung des Reaktionszusatzes bei den genannten Temperaturen zulaufen. Die Zugabedauer beträgt vorzugsweise 1 bis 5 Stunden.

Zur Beschleunigung der Reaktion und zur Verbesserung der Ausbeuten und der Reinheit der Polymerisate hat es sich als günstig erwiesen, dem Reaktionsansatz geringe Mengen (0,1 bis 3 Gewichtsprozent — bezogen auf MSA —, vorzugsweise 0,1 bis 2 Gewichtsprozent) einer anorganischen oder organischen Säure zuzusetzen.

Solche Säuren sind nichtoxidierend und es seien beispielsweise Salzsäure, Schwefelsäure, Orthoborsäure, p-Toluolsäure, Phosphorsäure, Weinsäure, Citronensäure und/oder Adipinsäure zu nennen.

Ähnlich positiv wirkt sich der Zusatz von Reduktionsmitteln und vor allem von reduzierend wirkenden Säuren aus, die in den selben Mengen wie die obengenannten Säuren zugesetzt werden.

Als Reduktionsmittel kommen beispielsweise Hydrazin, Hydroxylamin und deren Salze, sodann Hydrochinon, Pyrogallol, Aldehyde, wie Formaldehyd, Acetaldehyd oder Glutardialdehyd in Betracht und als reduzierende Säuren, die bevorzugt zu empfehlen sind, weil sie Reduziervermögen und Säurewirkung vereinigen, seien unterphosphorige Säure, phosphorige Säure, schweflige Säure, sodann Aldehydsäuren, wie Glyoxylsäure, Phenolcarbonsäuren, wie Salicylsäure, und Zuckersäuren, wie Ascorbinsäure zu nennen. Auch Oxalsäure als reduzierende Säure ist mit Erfolg einsetzbar.

Die erfindungsgemäße Polymerisation ergibt in einem Arbeitsgang hydrolysierte Polymaleinsäure.

Möglicherweise wirkt das wäßrige Wasserstoffperoxid, das in einer Menge eingesetzt wird, die weit über der üblichen katalytischen Menge liegt, gleichzeitig als hydrolysierendes Agens.

Die erhaltenen Polymaleinsäuren können, wenn sie in Waschmitteln verwendet werden, mit Alkalihydroxiden, wie NaOH oder KOH in üblicher Weise neutralisiert werden.

Sie wirken als ausgezeichnete Inkrustierungsinhibitoren.

Ihre Wirkung ist in manchen Fällen so gut, daß sie sogar geringere Aschegehalte bei gewaschenen Geweben erbringen, als Phosphate wie Pentanatriumtriphosphat, die in den bisherigen Waschmitteln zu 40 Gewichtsprozent und mehr enthalten sind.

Weiter hat sich gezeigt, daß die Polymaleinate ein hohes Calciumbindevermögen und eine brauchbare Weißwaschwirkung zeigen.

Die Polymaleinsäuren bzw. ihre Salze können je nach Anwendungszweck den Waschmitteln in verschiedenen Mengen zugesetzt werden. Als Inkrustierungsinhibitoren liegen sie im allgemeinen — bezogen auf feste Anteile — zu 1 bis 6 Gewichtsprozent, vorzugsweise 0,5 bis 5 Gewichtsprozent, vor. Als Phosphatsubstitute können sie bis zu 40 Gewichtsprozent vorliegen.

Die nun folgenden Beispiele erläutern Herstellung und Verwendung der erfindungsgemäß herzustellenden Produkte. Angegebene Teile sind Gewichtsteile.


Beispiele
A) Herstellungsbeispiele

Zu einer Lösung von Maleinsäureanhydrid in Acetanhydrid gibt man innerhalb 4 bis 5 Stunden bei 110 bis 120°C Wasserstoffperoxid als 50prozentige wäßrige Lösung unter Rühren zu.

Anschließend hält man den Ansatz noch weitere 2 Stunden auf einer Temperatur von ca. 105°C.

Nach destillativer Entfernung der flüssigen Anteile wird das erhaltene feste Polymerisat getrocknet.

Von diesem festen Produkt wird anschließend die Hydrierjodzahl, die ein Maß für den Restmonomerengehalt darstellt, und das Molgewicht bestimmt.

In der folgenden Tabelle 1 werden Produkte dargestellt, die ohne oder mit Säure- oder Reduktionsmittelzusatz erhalten wurden. Letztere Stoffe wurden vor der Reaktion der MSA/Acetanhydridmischung zugesetzt.

Die Beispiele 1 bis 14 geben Produkte wieder, die mit den erfindungsgemäßen Maßnahmen erhalten wurden.

Die Beispiele a bis j zeigen Produkte, bei denen die Ausgangsmischungen in Molverhältnissen vorlagen, die außerhalb der erfindungsgemäßen Grenzen liegen.

Zur Verwendung in Waschmitteln wurden die dafür ausgewählten Substanzen neutralisiert:

Man löst 1000 Teile der nach den betreffenden Beispielen erhaltenen Polymaleinsäuren in 900 Teilen Wasser bei ca. 40 bis 50°C und versetzt die Lösung mit 890 Teilen 50prozentiger Natronlauge. Man erhält eine ca. 50prozentige Lösung des Natriumsalzes der Polymaleinsäure, die direkt bei den Waschversuchen eingesetzt wird.

Bei der Tabelle 1 gelten folgende Zeichenerklärungen.

Ac  = Acetanhydrid
HIZ = Hydrierjodzahl
MG  = Molekulargewicht

3

A     = Ausbeute in Gew.-%

Z     = zugesetzte Säure oder Reduktionsmittel in Mengen von 1 Gewichtsprozent, bez. auf MSA

In der Rubrik »Farbe« gelten die Bewertungsziffern:

1 = fast farblos bis 6 = schwarz.

Dabei stellt eine Bewertungsziffer von 3 (dunkelgelb) eine Substanz dar, die in neutralisierter Form gerade noch ohne störende Färbungen in Waschmitteln hervorzurufen, akzeptabel ist.

Tabelle 1

| Beispiel | MSA : Ac : H₂O₂ Molverhältnis | Z | Farb- bewertung | HIZ | MG | A |
|---|---|---|---|---|---|---|
| 1 | 1 : 1,35 : 0,45 | – | 3 | 14 | 220 | 100 |
| 2 | 1 : 1,35 : 0,45 | $H_3PO_3$ | 1,5 | 5,4 | 650 | 100 |
| 3 | 1 : 1,35 : 0,45 | Oxalsäure | 1,5 | 6,0 | 1030 | 100 |
| 4 | 1 : 1,35 : 0,45 | Salicylsäure | 1,5 | 4,0 | 470 | 100 |
| 5 | 1 : 1,35 : 0,45 | Hydrochinon | 2 | 4,0 | 880 | 100 |
| 6 | 1 : 1,35 : 0,45 | Borsäure | 2 | 1,3 | 720 | 100 |
| 7 | 1 : 1,35 : 0,45 | Phosphorsäure | 3 | 6,0 | 460 | 95 |
| 8 | 1 : 1,35 : 0,45 | Schwefelsäure | 3 | 6,0 | 400 | 95 |
| 9 | 1 : 1,35 : 0,45 | p-Toluolsulfosäure | 3 | 8,8 | 900 | 100 |
| 10 | 1 : 1,35 : 0,45 | Weinsäure | 2 | 7,5 | 420 | 100 |
| 11 | 1 : 1,35 : 0,45 | Citronensäure | 2 | 2,5 | 450 | 100 |
| 12 | 1 : 1,35 : 0,45 | Adipinsäure | 2 | 3,0 | 420 | 100 |
| 13 | 1 : 1 : 0,45 | $H_3PO_3$ | 2 | 4,0 | 450 | 95 |
| 14 | 1 : 1 : 35 : 0,22 | $H_3PO_3$ | 3 | 20 | 350 | 92 |
| a | 1 : 1,35 : 0,1 | $H_3PO_3$ | 4 | 30 | 310 | 88 |
| b | 1 : 1,35 : 0,05 | $H_3PO_3$ | 5 | 37 | 230 | 77 |
| c | 1 : 1,35 : 0,02 | $H_3PO_3$ | 6 | 72 | 142 | 47 |
| d | 1 : 0,5 : 0,45- | $H_3PO_3$ | 4,5 | 4 | 230 | 56 |
| e | 1 : 0,25 : 0,45 | $H_3PO_3$ | 5 | 10,5 | 180 | 20 |
| f | 1 : 1,35 : 0,1 | Borsäure | 6 | 35 | 150 | 5 |
| g*) | 1 : 1 : 0,45 | $H_3PO_3$ | 5 | 45 | 220 | 53 |
| h*) | 1 : 1 : 0,45 | $H_3PO_3$ | 5 | 32 | 450 | 78 |
| i*) | 1 : 1 : 0,45 | $H_3PO_3$ | 6 | 25 | 315 | 25 |
| j*) | 1 : 1 : 0,45 | $H_3PO_3$ | 6 | 20 | 250 | 13 |

*) Anstelle von Acetanhydrid:
Essigsäure (Beispiel g), Xylol (Beispiel h), Toluol (Beispiel i), Benzol (Beispiel j).

Nach der Neutralisation fielen die Farbbewertungszahlen um ca. 1 ab (mit Ausnahme der Beispiele 2 bis 4, die farblose Neutralisationsprodukte ergaben (Bewertung = 1).
Benotungen von 1 bis 2 bei neutralisierten Produkten bedeuten, daß die Polymaleinate in Waschmitteln brauchbar sind.

**0 009 171**

Die Ergebnisse zeigen, daß ein Arbeiten außerhalb des erfindungsgemäßen Bereichs zu unbefriedigenden Farbvertiefungen führt, die auch nah der Neutralisation nicht mehr auszugleichen sind. Gleichzeitig fallen auch die Ausbeuten ab, und die Hydrierjodzahlen steigen an.

B) Anwendungsbeispiele

Getestet wurden folgende Polymaleinsäuren (als Na-Salze, geordnet nach steigendem Molgewicht):

|                                     | Molgewicht |
|-------------------------------------|------------|
| Polymaleinsäure nach Beispiel  1    | 220        |
| Polymaleinsäure nach Beispiel 10    | 420        |
| Polymaleinsäure nach Beispiel 11    | 450        |
| Polymaleinsäure nach Beispiel  2    | 650        |
| Polymaleinsäure nach Beispiel  5    | 880        |
| Polymaleinsäure nach Beispiel  3    | 1030       |

Außerdem wurden gemäß DE-OS 2 732 628 und DE-AS 2 047 340 erhaltene verseifte Polymaleinsäuren getestet.

a) Inkrustierungsversuche

Die Versuche wurden mit einem handelsüblichen Waschmittel durchgeführt, das 30 Gewichtsprozent Na-tripolyphosphat enthielt.

| | |
|---|---|
| Waschgerät | Launder-Ometer |
| Temperatur | 40 – 95° C |
| Waschdauer | 45 min |
| Zahl der Waschzyklen | 20 |
| Wasserhärte | 22° d |
| Flottenkonzentration | 5 g/l |
| Flottenverhältnis | 1 : 12,5 |
| Prüfgewebe | Baumwolle des Wäschereiforschungsinstituts Krefeld |
| Veraschung | 2 Stunden bei 600° C |

Dem Waschmittel wurden jeweils 5 Gewichtsprozent, 2,5 Gewichtsprozent und 1 Gewichtsprozent — bezogen auf nichtwäßrige Waschmittelanteile an Polymaleinsäure und zum Vergleich an anderen bisher vorgeschlagenen Inkrustierungsinhibitoren eingesetzt.

Die Versuchsergebnisse sind in Tabelle 2 zusammengefaßt:

6

Tabelle 2

| Inhibitor nach Beispiel | Aschegehalt (Gew.-%) bez. auf Gewebe) bei Zusatz von (Gew.-% bez. auf Waschmittel) | | |
|---|---|---|---|
| | 5 | 2,5 | 1 |
| 1 | 0,19 | 2,15 | 3,50 |
| 10 | 0,13 | 1,90 | 3,40 |
| 11 | 0,15 | 1,95 | 3,45 |
| 2 | 0,16 | 2,17 | 3,55 |
| 5 | 0,15 | 2,00 | 2,95 |
| 3 | 0,20 | 2,15 | 3,45 |
| Copolymerisat aus MSA/Methylvinyläther | 3,51 | 5,95 | 6,76 |
| Polyacrylsäure, K-Wert = 20 | 5,32 | >6*) | >6 |
| Polyacrylsäure, K-Wert = 40 | 5,36 | >6 | >6 |
| Polyacrylsäure, K-Wert = 100 | 5,14 | >6 | >6 |
| Polyacrylsäure, K-Wert = 150 | 4,80 | 5,95 | >6 |
| Copolymerisat aus Acrylsäure und Hydroxypropylacrylat | 5,68 | 6,70 | − |
| Dimethylmalonsäure | 5,23 | >6 | >6 |
| Gemische aus Bernstein-, Glutar- und Adipinsäure | 5,38 | >6 | >6 |
| Aminomethylenphosphonsäure | 1,44 | 4,50 | >6 |
| Nitrilotriessigsäure | 1,23 | 4,14 | 5,71 |
| Polymaleinsäure nach DE-OS 27 32 628 nach Beispiel 1 (verseift mit NaOH) | 3,87 | 6,18 | 6,27 |
| Polymaleinsäure nach DE-AS 2 047 340 (verseift mit NaOH) | 5,48 | 5,76 | 5,90 |

*) Die Werte ›6‹ wurden nicht mehr genau bestimmt.

Blindversuche:

| | | |
|---|---|---|
| Waschmittel ohne Zusatz | 6,49% | Asche |
| Ausgangsgewebe | 0,08% | Asche |
| Waschmittel mit 40% Natriumtripolyphosphat | 0,5 % | Asche |

Die erfindungsgemäß hergestellten Polymaleinate sind somit allen anderen Zusatzmitteln überlegen.

b) Calciumbindevermögen

Die Bestimmung des Ca-Bindevermögens erfolgte durch Trübungstitration mit Ca-Acetatlösung. Dazu löst man 1 g des zu prüfenden Polymaleinsäuresalzes bzw. der Vergleichssubstanz gemäß dem Stand der Technik in 100 ml Wasser und versetzt dann mit 10 ml 2%iger Sodalösung. Der pH-Wert dieser Lösung wird auf 11 eingestellt und während der Titration konstant gehalten. Man titriert mit 4,4%iger Calciumacetatlösung, bis eine konstante Trübung auftritt. Die Zugabe der Calciumacetatlösung erfolgt in Intervallen von 30 Sekunden mit jeweils 1 ml. 1 ml verbrauchte Calciumacetatlösung entspricht 25 mg Calciumcarbonat.

Die Angaben in der nun folgenden Tabelle 3 erfolgen in Milligramm Calciumcarbonat pro Gramm Komplexbildner).

Tabelle 3

| Polymaleinsäure (als Na-Salz) nach | Calciumbindevermögen in mg $CaCO_3$/g bei | |
|---|---|---|
| Beispiel | 25°C | 90°C |
| 1 | 425 | 275 |
| 10 | 475 | 300 |
| 11 | 550 | 325 |
| 2 | 525 | 275 |
| 5 | 550 | 300 |
| 3 | 450 | 300 |
| Polymaleinsäure-Na nach DE-OS 27 32 628 | 180 | 150 |
| Natriumtripoly-phosphat | 225 | 150 |

c) Weißwaschwirkung

In einem Vollwaschmittel wurde beim Sequestrierungsmittel der Anteil an Natriumtripolyphosphat (Pentanatriumtriphosphat) schrittweise durch eines der erfindungsgemäß zu verwendenden Polymaleinsäure-Salze ersetzt und die Weißwaschwirkung an einem Baumwollprüfgewebe des Wäschereiforschungsinstituts Krefeld bestimmt.

Als Waschgerät diente ein Launder-O-meter.

Versuchsbedingungen:

| | |
|---|---|
| Temperatur | 40 – 95° C |
| Waschdauer | 45 min |
| Wasserhärte | 16° d |
| Waschmittelkonzentration | 5 g/l |
| Flottenverhältnis | 1 : 25 |
| pH-Wert | 10,5 |

Waschmittelzusammensetzung (Konzentrat):

10 Gew.-% $C_{12}$-Alkylbenzolsulfonat-Na-Salz
5 Gew.-% $C_{16}$/$C_{19}$-Fettalkohol, 11 Äthylenoxid
5 Gew.-% Kokosfett/Talgfettseife (80 : 20)
10 Gew.-% $Na_2SO_4$
20 Gew.-% Natriumperborat
40 Gew.-% Sequestrierungsmittel
10 Gew.-% Wasser

Die Ergebnisse sind aus der nun folgenden Tabelle 4 ersichtlich.

Die Weißwaschwirkung wurde durch Prüfung der gewaschenen Prüflappen in einem ELREPHO-Gerät bestimmt.

Tabelle 4

Weißwaschwirkung

| Natriumpolymaleinat gemäß Beispiel | 1 Teil Polymaleinat 3 Tle. Phosphat | 1 Teil Polymaleinat 1 Teil Phosphat | 3 Teile Polymaleinat 1 Teil Phosphat | Poly- maleinat |
|---|---|---|---|---|
| 1 | 74,2 | 72,0 | 73,9 | 76,1 |
| 10 | 73,3 | 75,2 | 74,9 | 75,3 |
| 11 | 71,2 | 73,6 | 72,9 | 73,2 |
| 2 | 75,3 | 74,6 | 73,3 | 73,9 |
| 5 | 73,8 | 74,5 | 74,4 | 75,4 |
| 3 | 74,6 | 73,9 | 75,1 | 74,8 |
| Natriumtriphosphat ohne Zusatz | 73,0 | – | – | |
| Polymaleinat nach Beispiel 1 der DE-OS 27 32 628 | | | | 68,0 |

Zusammenfassend ergibt sich, daß die nach dem erfindungsgemäßen Verfahren erhaltenen Verbindungen in bezug auf Inhibierung der Inkrustierung Calciumbindevermögen und Weißwaschwirkung Phosphate zumindest teilweise ersetzen können.

**Patentansprüche**

1. Verfahren zur Herstellung von Polymaleinsäuren mit Molgewichten zwischen 200 und 1500 durch Polymerisation von Maleinsäureanhydrid in Gegenwart von Wasserstoffperoxid und Essigsäureanhydrid und Verseifung des gebildeten Polymaleinsäureanhydrids, dadurch gekennzeichnet, daß man das Maleinsäureanhydrid in der 1- bis 5fachen molaren Menge Essigsäureanhydrid gelöst mit der 0,2- bis 0,5fachen molaren Menge Wasserstoffperoxid, in Form einer wäßrigen Lösung, unter gleichzeitiger Erhitzung des Reaktionsansatzes auf 80 bis 140°C versetzt und nach der Zugabe des Wasserstoffperoxids die Reaktion bei 100 bis 140°C zu Ende führt.

2. Verfahren nach Anspruch 1, dadurch gekennzeichnet, daß man die Reaktion in Gegenwart von 0,1 bis 3% — bezogen auf das Gewicht des Maleinsäureanhydrids — einer anorganischen oder organischen nichtoxidierenden Säure durchführt.

3. Verfahren nach Anspruch 1 oder 2, dadurch gekennzeichnet, daß man die Reaktion in Gegenwart eines Reduktionsmittels durchführt.

4. Verfahren nach Ansprüchen 1 bis 3, dadurch gekennzeichnet, daß man die Reaktion in Gegenwart einer reduzierenden Säure durchführt.

5. Verwendung der nach Ansprüchen 1 bis 4 erhaltenen Polymaleinsäuren als Gerüststoffsubstanzen und Inkrustierungsinhibitoren in Waschmitteln.

**Claims**

1. A Process for the production of a polymaleic acid having a molecular weight of from 200 to 1,500, by polymerizing maleic anhydride in the presence of hydrogen peroxide and acetic anhydride and hydrolyzing the resulting polymaleic anhydride, characterized in that the maleic anhydride, dissolved in from 1 to 5 moles of acetic anhydride per mole of maleic anhydride, is mixed with from 0.2 to 0.5 mole of hydrogen peroxide, in the form of an aqueous solution, per mole of maleic anhydride, with simultaneous heating of the reaction batch to 80 – 140°C, and the reaction is completed at 100 – 140°C after the addition of the hydrogen peroxide.

2. A process as claimed in claim 1, characterized in that the reaction is carried out in the presence of from 0.1 to 3%, based on the weight of maleic anhydride, of an inorganic or organic non-oxidizing acid.

3. A process as claimed in claim 1 or 2, characterized in that the reaction is carried out in the presence of a reducing agent.

4. A process as claimed in claims 1 to 3, characterized in that the reaction is carried out in the presence of a reducing acid.

5. The use of the polymaleic acids obtained according to claims 1 to 4, as builders and encrustation inhibitors in detergents.

**0 009 171**

Revendications

1. Procédé de préparation d'acides polymaléiques avec un poids moléculaire compris entre 200 et 1500 par polymérisation de l'anhydride maléique en présence d'anhydride acétique et de peroxyde d'hydrogène, suivie de la saponification de l'anhydride polymaléique formé, caractérisé en ce que l'on ajoute à l'anhydride maléique, dissous dans une proportion 1 à 5 fois molaire d'anhydride acétique, une proportion 0,2 à 0,5 fois molaire de peroxyde d'hydrogène sous forme d'une solution aqueuse avec chauffage concomitant du mélange réactionnel entre 80 et 140°C et, l'addition du peroxyde d'hydrogène terminée, on complète la réaction par un chauffage entre 100 et 140°C.

2. Procédé suivant la revendication 1, caractérisé en ce que la réaction est effectuée en présence d'un acide minéral ou organique non oxydant en une proportion de 0,1 à 3% en poids par rapport à l'anhydride maléique.

3. Procédé suivant l'une des revendications 1 et 2, caractérisé en ce que la réaction est effectuée en présence d'un agent réducteur.

4. Procédé suivant l'une des revendications 1 à 3, caractérisé en ce que la réaction est effectuée en présence d'un acide réducteur.

5. Utilisation des acides polymaléiques préparés par le procédé suivant l'une des revendications 1 à 4 comme adjuvants actifs et inhibiteurs d'incrustations dans des compositions détergentes.